# EUROPÄISCHE PATENTANMELDUNG

(11) **EP 2 292 675 A1**
(43) Veröffentlichungstag der Anmeldung: **09.03.2011**
(21) Anmeldenummer: 09011490.1
(22) Anmeldetag: 08.09.2009
(51) Int. Cl.: C08G 18/28, C08G 18/32, C08G 18/50, C08G 18/70, C08G 18/73, C08G 18/75, C08G 18/76, C09D 167/00, C09D 7/00, C08G 18/71

(54) **Polyharnstoffe als Rheologiesteuerungsmittel**

(71) Anmelder: BYK-Chemie GmbH, 46483 Wesel (DE)
(72) Erfinder: Leutfeld, Daniela, 46485 Wesel (DE); Morhenn, Bianca, 47829 Krefeld (DE); Eberhardt, Marc, 46485 Wesel (DE); Pawlczyk, Ina, 46045 Oberhausen (DE); Omeis, Jürgen, 46286 Dorsten Lembeck (DE); Bühne, Sylvia, 47198 Duisburg (DE); Jacobs, Berthold, 48734 Reken (DE)
(74) Vertreter: Leifert & Steffan

(57) **Zusammenfassung**

Die Erfindung betrifft Polyharnstoffe mit einem gewichtsmittleren Molekulargewicht von 5000 bis 70000 g/mol, ihre Herstellung und ihre Verwendung als Rheologiesteuerungsmittel. Weiterhin betrifft die Erfindung Rheologiesteuerungsmittel enthaltend Polyharnstoffe und ihre Verwendung. Die Erfindung betrifft im Weiteren Formulierungen enthaltend Polyharnstoffe.

## Beschreibung

Die Erfindung betrifft Polyharnstoffe, ihre Herstellung und ihre Verwendung als Rheologiesteuerungsmittel. Weiterhin betrifft die Erfindung Rheologiesteuerungsmittel enthaltend Polyharnstoffe und ihre Verwendung. Die Erfindung betrifft im Weiteren Formulierungen enthaltend Polyharnstoffe.

Um die Rheologie von flüssigen Beschichtungssystemen zu steuern, werden vorwiegend organisch modifizierte Bentonite, Kieselsäuren, hydriertes Rizinusöl und Polyamidwachse eingesetzt. Diese Stoffe sind meist trockene Feststoffe, die mittels Lösemitteln und Scherkräften zu einem Halbfabrikat aufgeschlossen bzw. durch gezielte Temperatursteuerung in das flüssige Beschichtungssystem eingebracht werden müssen. Werden diese Temperaturen nicht eingehalten, treten im fertigen Beschichtungssystem Kristallite auf, die zu Fehlern in der Beschichtung führen können.

Diese rheologischen Hilfsstoffe führen häufig zu Trübungen und Schleierbildungen (Haze) in klaren, transparenten Beschichtungen. Außerdem kann der Umgang mit trockenen, pulverförmigen Produkten, die Stäube bei der Verarbeitung verursachen, technologisch ungünstig sein.

Andere Lösungen zur Rheologiesteuerung wurden in der europäischen Patentanmeldung EP-A-0198519 dargestellt. Hier wird ein Isocyanat mit einem Amin in Gegenwart von Lackharz-Lösungen zu einem Harnstoff umgesetzt, der mikrokristalline nadelförmige Kristalle bildet. Diese so modifizierten Lackbindemittel werden als rheologiesteuernde und ablaufverhindernde Bindemittel, als sogenannte "sag control agents", verwendet.

Andere Vorschläge zur Rheologiesteuerung werden in der US 4311622 und US 4677028 beschrieben, wo Polyisocyanate oder Polyisocyanurate mit Mono- oder Polyaminen in zwingender Anwesenheit eines Bindemittels zu Polyharnstoffen umgesetzt werden.

In der WO 02/04579 werden Harnstoffe beschrieben, die zur Verdickung von Fetten oder Ölen eingesetzt werden. Die Herstellung dieser Verdicker erfolgt durch stöchiometrische Umsetzung von primären Aminen mit Diisocyanaten im zu verdickenden Fett oder Öl.

Die Patentschrift US 5554586 beschreibt ebenfalls die in-situ Verdickung von Ölen. Hierbei wird eine Mischung aus primären monofunktionellen Aminen mit Polyoxyalkylendiaminen mit Diisocyanaten im zu verdickenden Öl umgesetzt.

Die Schriften US 2005/0182205 und WO 95/09201 beschreiben beide die Verdickung von Formmassen (sog. Bulk Moulding Compounds "BMC" und sog. Sheet Moulding Compounds "SMC") unter Verwendung von Harnstoffderivaten, die durch Reaktion von Isocyanaten mit Di- oder Triaminen erhalten werden. Als Isocyanat-Komponente können aliphatische, aromatische Diisocyanate aber auch Reaktionsprodukte aus Diisocyanaten mit Polyether- oder Polyesterdiolen eingesetzt werden. Als AminKomponente kommen niedermolekulare Di- und Triamine und Polyamine zum Einsatz. Die Herstellung der Harnstoffverbindungen erfolgt durch Mischen der Amin- und Isocyanat-Komponente im entsprechenden Harz.

Der Nachteil aller im Stand der Technik beschriebenen Produkte liegt darin, dass sie immer in dem zu verdickendes Medium, dessen Rheologie sie beeinflussen sollen, herzustellen sind. Die Produkte sind somit nicht unabhängig vom zu verdickenden Medium. Sie sind nicht lagerstabil, sondern weisen nach kurzer Zeit Klumpen und/oder Stippen auf. Ein weiterer Nachteil ist, dass die Herstellung dieser thixotropierten Medien mit Hilfe eines Pre-Gels erfolgen muss. Dieses viskose Pre-Gel muss üblicherweise sofort nach Herstellung verarbeitet werden, da es nach längerer Standzeit nicht mehr störungsfrei eingearbeitet werden kann. Eine nachträgliche Korrektur von fertigen Formulierungen ist somit nicht möglich. Die rheologiesteuernden Mittel des Standes der Technik können nicht allein, sondern nur in Anwesenheit von filmbildenden hergestellt werden. Sie sind somit nur limitiert einsetzbar.

EP 1188779 beschreibt ein Verfahren zur Herstellung einer als Thixotropie-Mittel wirksamen, Harnstoffurethane enthaltenden Lösung und Verwendung dieser Lösung zur Verdickung von Beschichtungsmitteln. Die Harnstoffurethane werden dabei erhalten, indem Monohydroxyverbindungen mit einem Überschuss von Toluylendiisocyanat umgesetzt werden, der nicht umgesetzte Teil des Toluylendiisocyanats aus dem Reaktionsgemisch entfernt wird und die erhaltenen Monoiisocyanat-Addukte mit Diaminen im molaren Verhältnis 2:1 in einem Lösemittel zu Harnstoffurethanen weiter umgesetzt werden. EP-A-0006252 beschreibt analoge Harnstoffurethane, die durch stöchiometrische Umsetzung von Monohydroxyverbindungen mit Diisocyanaten und Diaminen erhalten werden.

Die Patentschrift DE 10241853 B3 beschreibt polymere Harnstoffurethane, erhältlich durch eine erste Umsetzung eines Überschusses Diisocyanats mit einem Polyol, so dass sich ein beidseitig NCO-terminiertes Urethanpolymer bildet, welches neben überschüssigem Diisocyanat vorliegt, und anschließender zweiter Umsetzung der Mischung aus dem beidseitig NCO-terminierten Urethanprepolymer und dem überschüssigen Diisocyanat einerseits und einer Mischung aus einem primären Monoamin und einem primären Diamin andererseits. Als Reaktionsmedien werden polare aprotische Lösemittel verwendet. Die so erhaltenen Harnstoffurethanlösungen werden als Rheologiesteuerungsmittel in flüssigen Polymersystemen eingesetzt.

Der Nachteil dieser Harnstoffurethane ist die eingeschränkte Scherstabilität, sowie die je nach Anwendung sehr stark ausgeprägte Thixotropie. Dies bedeutet, dass sich die Viskosität nach Scherung durch die Applikation nur zeitverzögert wieder aufbaut und somit eine schlechte Antiablaufwirkung erzielt wird.

Es war daher Aufgabe der vorliegenden Erfindung, neue Rheologiesteuerungsmittel bereitzustellen. Diese sollten die in den vorgenannten Schriften genannten Nachteile nicht aufweisen. Insbesondere sollten Rheologiesteuerungsmittel gefunden werden, die lagerstabil sind. Weiterhin sollten die Rheologiesteuerungsmittel nicht an das zu verdickende Medium wie das Bindemittel gebunden sein, sondern als fertiges Additiv an beliebiger Stelle eines Herstellprozesses von Formulierungen zugesetzt werden können. Diese Additive sollen auch über einen längeren Zeitraum einfach zu verarbeiten sein, zudem eine gute und breite Verträglichkeit und eine gering ausgeprägte Thixotropie aufweisen.

Die neuen Rheologiesteuerungsmittel sollten sich durch eine starke rheologische Wirksamkeit und eine gute Scherstabilität auszeichnen. Zudem sollten sie geeignet sein, das Ablaufverhalten von Dickschichtsystemen nach DIN EN ISO 12944, die durch Spritzapplikation appliziert werden, einzustellen. Sie sollten weiterhin weniger temperaturabhängig sein als die Rheologiesteuerungsmittel des Standes der Technik, wodurch sie sich zur Rheologiekontrolle von Einbrennsystemen und bei Beschichtungsvorgängen, die bei höheren Temperaturen, d.h. insbesondere bei Temperaturen von 70 °C bis 180 °C, ablaufen, eingesetzt werden können. Die Rheologiesteuerungsmittel sollten des Weiteren als Antiabsetzmittel zur Erhöhung der Lagerstabilität und zur Verringerung der Läuferneigung von Lacken oder Beschichtungsmitteln eingesetzt werden können. Auch in Systemen, die polare Lösemittel wie Alkohole und Ketone enthalten, sollten die Rheologiesteuerungsmittel eine gute Verträglichkeit und eine gute rheologische Wirksamkeit aufweisen. Mit dieser Substanzklasse sollte es möglich sein, Rheologiesteuerungsmittel für den Einsatz in Medien unterschiedlicher Polarität zu erhalten.

Überraschenderweise wurde gefunden, dass diese Aufgaben gelöst werden können durch Polyharnstoffe der allgemeinen Formel (I) 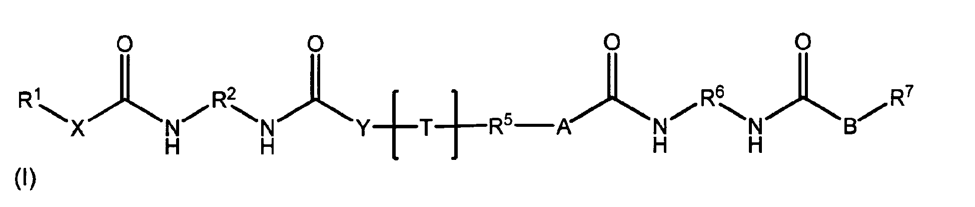 als neue Substanzklasse von Rheologiesteuerungsmitteln, worin die Variablen folgende Bedeutung haben:
T ist eine polymere Einheit, welche mindestens 4 Harnstoffgruppen umfasst,
R¹ und R⁷ sind unabhängig voneinander verzweigte oder unverzweigte C₄-C₃₂-Alkyl-, C₃-C₁₈-Alkenyl-, C₂-C₂₀-Alkinyl-, C₃-C₂₀-Cycloalkyl-, C₃-C₂₀-Cycloalkenyl-, C₅-C₁₂-Aryloder -Arylalkyl-, CₘH₂ₘ₊₁(O-CₙH₂ₙ)ₚ-(O-CH(C₆H₅)-CH₂)ᵤ-, U-C₆H₄-(CH₂)ₛ-(O-CnH₂ₙ)ₓ-(O-CH(C₆H₅)-CH₂)ᵤ-, CₘH₂ₘ₊₁(O-CₙH₂ₙ)ₚ-(O-CH(C₆H₅)-CH₂)ᵤ-(OOC-CᵥH₂ᵥ)ₓ-, U-C₆H₄-(CH₂)ₛ-(O-CₙH₂ₙ)ₚ-(O-CH(C₆H₅)-CH₂)ᵤ-(OOC-CᵥH₂ᵥ)ₓ-, C₄-C₃₂-Hydroxyalkyl-, C₄-C₃₂-Carboxyalkyl-, -CₘH₂ₘC(=O)R⁸-, -CₘH₂ₘCOOR⁸-, -CₘH₂ₘC(=O)NR⁸R⁹- oder - CₘH₂ₘOC(=O)NR⁸R⁹-Reste, wobei die Reste substituiert oder unsubstituiert sein können, die Amino- und/oder Carboxylgruppen in versalzter oder quartärnisierter Form vorliegen können und wobei CₘH₂ₘ eine lineare oder verzweigte Alkylengruppe ist und R⁸, R⁹ unabhängig voneinander Wasserstoff, verzweige oder unverzweigte C₁-C₃₂-Alkyl-, C₃-C₁₈-Alkenyl-, C₂-C₂₀-Alkinyl-, C₃-C₂₀-Cycloalkyl-, C₃-C₂₀ Cycloalkenyl-, C₅-C₁₂-Aryl- oder -Arylalkyl-, C₁-C₃₂-Alkoxyalkyl- oder C₁-C₃₂-Acyloxyalkyl-Gruppen darstellen, wobei m = 0-32, n = 2-4, x = 0-100, u = 0-100, v = 1-22, p = 0-100, s = 0-1, U = H, C₁-C₁₂-Alkyl oder -C₆H₅)₁₋₄ ist,
R² und R⁶ sind unabhängig voneinander verzweigte oder unverzweigte C₄-C₂₂-Alkylen-, C₃-C₁₈-Alkenylen-, C₂-C₂₀-Alkinylen-, C₃-C₂₀-Cycloalkylen-, C₃-C₂₀ Cycloalkenylen-, C₅-C₁₂-Arylen- oder -Arylalkylen-Reste,
R⁵ ist ein verzweigter oder unverzweigter Polyester-, Polyether-, Polyamid-, C₄-C₂₂-Alkylen-, C₃-C₁₈-Alkenylen-, C₂-C₂₀-Alkinylen-, C₃-C₂₀-Cycloalkylen-, C₃-C₂₀ Cycloalkenylen-, C₅-C₁₂-Arylen- oder -Arylalkylen-Rest,
A, B, X und Y sind unabhängig voneinander -O- oder -NR¹⁰- mit R¹⁰ = H, verzweigte oder unverzweigte C₁-C₃₂-Alkyl-, C₃-C₁₈-Alkenyl-, C₂-C₂₀-Alkinyl-, C₃-C₂₀-Cycloalkyl-, C₃-C₂₀-Cycloalkenyl-, C₅-C₁₂-Aryl- oder -Arylalkyl-Reste,
wobei das gewichtsmittlere Molekulargewicht der Polyharnstoffe 5000 bis 70000 g/mol beträgt.

Überraschenderweise wurden Polyharnstoffe gefunden, die die Lager- und Scherstabilität von Formulierungen erhöhen. Weiterhin war es überraschend, dass Rheologiehilfsmittel gefunden wurden, die diese Polyharnstoffe enthalten, wobei sich das Standvermögen nach Scherung nicht nur durch Polyharnstoffe mit niedrigeren gewichtsmittleren Molekulargewichten bis 24000 g/mol, sondern auch mit höheren gewichtsmittleren Molekulargewichten über 24000 g/mol nur geringfügig verringerte. Zudem sind die erfindungsgemäßen Polyharnstoffe lagerstabil. Sie sind weiterhin unabhängig vom zu verdickende Medium und können ohne dieses hergestellt werden. Sie sind auch über einen längeren Zeitraum einfach zu verarbeiten, weisen eine gute und breite Verträglichkeit und eine gering ausgeprägte Thixotropie auf.

Bei den erfindungsgemäßen Polyharnstoffen handelt es sich bevorzugt um ausreagierte Verbindungen, die keine weitere Reaktion mit Bestandteilen der Formulierungen eingehen können. Eine in-situ-Bildung der Polyharnstoffe, wie sie z.B. in der EP-A-0198519 durch Zusammengeben von Amin und Isocyanat, in Anwesenheit des Bindemittels beschrieben wird, scheidet z.B. bei ungesättigten Polyesterharzen oder UV-härtbaren Acrylatlacken aus, da die Amine spontan mit dem Bindemittel reagieren. In einer bevorzugten Ausführungsweise handelt es sich bei den erfindungsgemäßen Polyharnstoffen um ausreagierte Systeme, das heißt, R¹, R⁷, R², R⁶, R⁵ und R¹⁰ haben keine funktionellen Gruppen, die mit dem Bindemittelsystem reagieren.

In einer anderen bevorzugten Ausführungsform, insbesondere beim Einsatz in polaren Systemen wie zum Beispiel wässrigen Medien, liegen die Reste R¹ und R⁷ der erfindungsgemäßen Polyharnstoffe substituiert vor und enthalten vorzugsweise polare funktionelle Gruppen wie Amin-, OH-, Carboxyl-, Ester-, Nitril-, Amid-Gruppen oder heteroaromatische Gruppierungen. Die Amingruppen können versalzt oder quartärnisiert sein. Die Carboxylgruppen können zu Carboxylatgruppen versalzt sein. In einer weiteren Ausführungsform enthalten die Reste R¹ und/oder R⁷ beim Einsatz in polaren Systemen Polyester- oder Polyethergruppen.

Übliche Gegenionen für die protonierte, d.h. versalzte Form der Aminogruppen sind beispielsweise Halogenide. Übliche Gegenionen der Carboxylatgruppe sind Alkalimetallionen wie K⁺ oder Na⁺ oder Erdalkalimetalle. Übliche Quartärnisierungsmittel sind beispielsweise Alkylhalogenide, vorzugsweise Alkyliodide.

Vorzugsweise sind die Reste R² und R⁶ gleiche oder verschiedene verzweigte oder unverzweigte C₅-C₁₂-Arylen-, C₅-C₁₂-Arylalkylen, C₃-C₂₀-Cycloalkylen- oder C₄-C₂₂-Alkylen-Reste.

Die Reste R⁸ und R⁹ sind vorzugsweise unabhängig voneinander Wasserstoff, verzweigte oder unverzweigte C₁-C₃₂-Alkyl-, C₁-C₃₂-Alkoxyalkyl-, C₅-C₁₂-Aryl- oder - Arylalkyl-Reste.

R¹⁰ ist bevorzugt H, ein verzweigter oder unverzweigter C₁-C₃₂-Alkyl-, C₃-C₂₀-Cycloalkyl-, C₅-C₁₂-Aryl- oder -Arylalkyl-Rest.

Bevorzugte Polyether-Gruppen sind Ethylenoxid- und/ oder Propylenoxid- und/ oder Butylenoxid- und/ oder Styroloxidgruppen.

Bevorzugt ist m = 1-18. In einer weiteren bevorzugten Ausführungsform ist x = 0-50. In einer weiteren bevorzugten Ausführungsform ist u = 0-50. In einer weiteren bevorzugten Ausführungsform ist v = 1-6. In einer weiteren bevorzugten Ausführungsform ist p = 0-50.

In einer besonders bevorzugten Ausführungsform ist m = 1-18, x = 0-50, u = 0-50, v = 1-6 und p = 0-50.

Die polymere Einheit T der erfindungsgemäßen Polyharnstoffe nach Formel (I) kann Urethangruppen umfassen. Vorzugsweise umfasst die polymere Einheit T keine Urethangruppen. Besonders bevorzugt umfasst T keine Urethangruppen und A und Y der Formel (I) sind gleich NR¹⁰.

In einer bevorzugten Ausführungsform stellt die polymere Einheit T eine Einheit der Formel (II) dar: 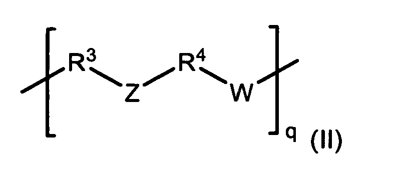 worin
R³ und R⁴ jeweils gleich oder verschieden sind und unabhängig voneinander verzweigte oder unverzweigte Polyester-, Polyether-, Polyamid-, C₄-C₂₂-Alkylen-, C₃-C₁₈-Alkenylen-, C₂-C₂₀-Alkinylen-, C₃-C₂₀-Cycloalkylen-, C₃-C₂₀ Cycloalkenylen-, C₅-C₁₂-Arylen- oder - Arylalkylen-Reste repräsentieren,
Z und W jeweils gleich oder verschieden sind und unabhängig voneinander -NHCOO-oder -NH-CO-NH- repräsentieren und
q = 2 - 200 ist.

Bevorzugt sind R³, R⁴ und R⁵ verzweigte oder unverzweigte Polyester-, Polyether-, Polyamid-, C₄-C₂₂-Alkylen-, C₃-C₂₀-Cycloalkylen-, C₅-C₁₂-Arylen- oder - Arylalkylen-Reste, wobei die Reste R³, R⁴ und R⁵ gleich oder verschieden sein können.

Bevorzugt ist q = 2 - 150, besonders bevorzugt ist q = 2 - 100 und ganz besonders ist q = 2 - 50.

Das gewichtsmittlere Molekulargewicht der erfindungsgemäßen Verbindungen liegt vorzugsweise im Bereich von 5000 - 60000 g/mol und besonders bevorzugt von 5000 - 55000 g/mol.

Das gewichtsmittlere Molekulargewicht ist das Gewichtsmittel der mittels Gelpermeationschromatographie (GPC) bestimmten Molmassenverteilung. Die Molmassenverteilung wird gemäß DIN 55672 Teil 2 bestimmt. Als Eluent wird eine Lösung von Lithiumbromid (Gehalt 5 g/L) in Dimethylacetamid verwendet. Zur Kalibrierung werden eng verteilte, linear aufgebaute Polymethylmethacrylat-Standards mit Molekulargewichten zwischen 1000000 und 102 verwendet. Die Temperatur des gesamten GPC-Systems (Injektor, Probenteller, Detektoren und Säulen) beträgt 80 °C.

Die rheologische Wirkungsweise der erfindungsgemäßen Verbindungen wird in erster Linie durch ihr Molekulargewicht und ihre Polarität bestimmt.

Die erfindungsgemäßen Polyharnstoffe können für eine gute Verträglichkeit und rheologische Wirksamkeit zur Rheologiesteuerung in polare Lösemittel enthaltenen Systemen wie Alkohol- und Keton-enthaltenen Systemen eingesetzt werden. Je höher das gewichtsmittlere Molekulargewicht, desto höher sollte die Polarität der Polyharnstoffe sein. Vorzugsweise wird die Polarität durch polare funktionelle Gruppen, die die Reste R¹ und/oder R⁷ enthalten, oder durch Polyester- und Polyethergruppen in den Resten R¹ und/oder R⁷ erreicht. Geeignete polare funktionelle Gruppen sind beispielsweise Amin-, OH-, Carboxyl-, Ester-, Nitril-, Amid-Gruppen oder heteroaromatische Gruppierungen, wobei die Amino- und Carboxylgruppen versalzt oder quartärnisiert sein können. Carboxylgruppen als polare funktionelle Gruppen sind bevorzugt.

Vorzugsweise werden Polyharnstoffe mit einem gewichtsmittleren Molekulargewicht von 5000 bis 12000 g/mol für eine gute Verträglichkeit und rheologische Wirksamkeit in polare Lösemittel enthaltenen Systemen eingesetzt. Besonders bevorzugt sind Polyharnstoffe mit einem gewichtsmittleren Molekulargewicht von 5000 bis 12000 g/mol, deren Reste R¹ und/oder R⁷ mit polaren funktionellen Gruppen substituiert sind und/oder Polyester- und/oder Polyether-Gruppen enthalten.

Pigmente und Füllstoffe haben die Tendenz, während der Lagerung von Lacken oder Beschichtungsmitteln zu sedimentieren und teilweise recht harte, schwer aufrührbare Bodensätze zu bilden, die die Verarbeitung erschweren. Dies ist insbesondere der Fall bei der Lagerung von Pigmentkonzentraten oder Nagellacken. Bei der Applikation auf geneigten und senkrechten Flächen bilden sich bei höherer Filmstärke leicht Läufer. Bodensatzbildung und Läuferneigung sind nicht erwünschte Effekte. Diese können durch die erfindungsgemäßen Polyharnstoffe verhindert werden und führen somit zu lagerstabilen Systemen. Auch bei Lagertemperaturen größer als 40 °C sind die erfindungsgemäßen Polyharnstoffe geeignet, ein temperaturstabiles Antiabsetzverhalten zur Erhöhung der Lagerstabilität zu erzielen. Ein weiterer Vorteil der beschriebenen Polyharnstoffe ist, dass sie Bodensatzbildung und Läuferneigung über einen weiten Temperaturbereich von 20 bis 200 °C, bevorzugt 20 bis 150 °C und besonders bevorzugt von 20 bis 100 °C zuverlässig verhindern. Die erfindungsgemäßen Polyharnstoffe fungieren somit als Antiabsetzmittel und verhindern die Läuferneigung. Polyharnstoffe mit einem gewichtsmittleren Molekulargewicht von 5000 bis 12000 g/mol sind dabei bevorzugt.

Die erfindungsgemäßen Polyharnstoffe zeichnen sich auch durch eine sehr breite Verträglichkeit aus. Die rheologische Wirkung dieser Produkte ist weniger temperaturabhängig als die nach dem Stand der Technik (z.B. Patentschrift EP 1188779) hergestellten Produkte, wodurch sie bevorzugt zur Rheologiekontrolle von Einbrennsystemen, beziehungsweise bei Beschichtungsvorgängen, die bei höheren Temperaturen stattfinden, eingesetzt werden können. Nach DIN EN 971-1 versteht man unter Einbrennen einen Härtungsvorgang, bei dem die Vernetzung des Bindemittels durch Wärmeeinwirkung bei einer vorgegebenen Mindesttemperatur erfolgt. Einbrennsysteme sind also Beschichtungsmaterialien, die durch Temperatureinwirkung zu einem durchgehenden, festen Film ausgehärtet werden. Diese Aushärtung erfolgt üblicherweise bei höheren Temperaturen im Bereich von 70 °C bis 180 °C.

Für die Rheologiekontrolle der zuvor genannten Einbrennsysteme eignen sich vorzugsweise Polyharnstoffe mit einem gewichtsmittleren Molekulargewicht von 10000 bis 26000 g/mol, bevorzugt 12000 bis 21000 g/mol. Bevorzugt sind Polyester- oder Polyether-Strukturen in R¹ und R⁷. Ganz besonders bevorzugt sind Ethylenoxid- und/ oder Propylenoxid- und/ oder Butylenoxid- und/ oder Styroloxidgruppen geeignet. Die Reste R¹ und/oder R⁷ können polare funktionelle Gruppen enthalten.

Die erfindungsgemäßen Polyharnstoffe zeichnen sich auch durch eine starke rheologische Wirksamkeit und eine gute Scherstabilität aus. Sie sind daher bevorzugt geeignet, um beispielsweise das Ablaufverhalten von Dickschichtsystemen, die durch Spritzapplikation appliziert werden, einzustellen. Laut DIN EN ISO 12944 sind Dickschichtsysteme Beschichtungen mit einer Sollschichtdicke ≥ 80µm, die aus dickschichtig verarbeitbaren Beschichtungsstoffen in einem Arbeitsgang hergestellt werden. Diese Systeme werden bevorzugt als vor Korrosion schützende Beschichtungen eingesetzt.

Vorzugsweise werden zur Einstellung von Dickschichtsystemem Polyharnstoffe mit einem gewichtsmittleren Molgewicht von 24000 bis 55000 g/mol, vorzugsweise 34000 bis 50000 g/mol eingesetzt. Die Reste R¹ und/oder R⁷ können mit polaren funktionellen Gruppen substituiert sein und/oder Polyester- und/oder Polyether-Gruppen enthalten. Geeignete polare funktionelle Gruppen sind beispielsweise Amin-, OH-, Carboxyl-, Ester-, Nitril-, Amid-Gruppen oder heteroaromatische Gruppierungen, wobei die Aminound/oder die Carboxylgruppe versalzt oder quartärnisiert sein kann. Carboxylgruppen als polare funktionelle Gruppen sind bevorzugt.

Die erfindungsgemäßen Polyharnstoffe sind durch vier verschiedene Methoden herstellbar.

Methode a. sieht die Reaktion mindestens eines Diisocyanats mit mindestens einer Komponente K, welche zwei NCO-reaktive Gruppen aufweist, vor. Die beiden Komponenten werden in einem molaren Verhältnis von Diisocyanat zu Komponente K von (f+1):f mit f ≥ 1 zur Reaktion gebracht, so dass sich intermediär ein isocyanat-terminierter Harnstoff mit im Mittel zwei freien Isocyanat-Gruppen im Molekül bildet. Anschließend erfolgt eine vollständige Umsetzung der freien Isocyanat-Gruppen des Intermediats mit mindestens einer gegenüber Isocyanat-Gruppen reaktiven Komponente L. Diese Methode ist bevorzugt, um Polyharnstoffe zu erhalten, die ein gewichtsmittleres Molekulargewicht von 24000 bis 70000 g/mol aufweisen.

In einer zweiten Methode b. wird mindestens ein Diisocyanat mit mindestens einer Komponente K, welche zwei NCO-reaktive Gruppen aufweist, in einem molaren Verhältnis von Diisocyanat zu Komponente K von f:(f+1) mit f ≥ 1 zur Reaktion gebracht, so dass ein Intermediat mit im Mittel zwei freien Isocyanat-reaktiven, terminalen Gruppen im Molekül gebildet wird. Anschließend erfolgt eine vollständige Umsetzung der freien Isocyanat-reaktiven Gruppen des Intermediats mit mindestens einer Monoisocyanat-funktionellen Verbindung. Diese Methode ist bevorzugt, um Polyharnstoffe zu erhalten, die ein gewichtsmittleres Molekulargewicht von 24000 bis 70000 g/mol aufweisen.

In einer dritten Methode c. reagiert ein Gemisch aus mindestens einem Diisocyanat und mindestens einer Monoisocyanat-funktionellen Verbindung mit mindestens einer Komponente K, welche zwei NCO-reaktive Gruppen aufweist. Das molare Verhältnis von Diisocyanat zu Komponente K zu Monoisocyanat-funktioneller Verbindung beträgt f:(f+1):2 mit f ≥ 1. Diese Methode ist bevorzugt, um Polyharnstoffe zu erhalten, die ein gewichtsmittleres Molekulargewicht von 5000 bis 26000 g/mol aufweisen.

In einer vierten Methode d. reagiert ein Gemisch aus mindestens einer gegenüber Isocyanat-Gruppen reaktiven Komponente L und mindestens einer Komponente K, welche zwei NCO-reaktive Gruppen aufweist, mit mindestens einem Diisocyanat. Das molare Verhältnis von Komponente K zu Diisocyanat zu Komponente L beträgt f:(f+1):2 mit f ≥ 1. Diese Methode ist bevorzugt, um Polyharnstoffe zu erhalten, die ein gewichtsmittleres Molekulargewicht von 5000 bis 26000 g/mol aufweisen.

Die Zahlen f betragen für jede Methode vorzugsweise von 1 bis 100, bevorzugt von 1 bis 50 und besonders bevorzugt von 1 bis 30.

Die Reaktionen der Methoden a., b., c. und d. können in polaren aprotischen und unpolar aprotischen Lösemitteln sowie in polaren und unpolaren Trägermedien ablaufen. Vorzugsweise werden polare aprotische Lösemittel eingesetzt. Geeignete polare aprotische Lösemittel sind beispielsweise N-Methylpyrrolidon, N-Ethylpyrrolidon, N-Cyclohexylpyrrolidon, Dimethylsulfoxid, Dimethylformamid oder Dimethylacetamid. Geeignete unpolare Trägersysteme sind paraffinische Kohlenwasserstoffe. Auch Mischungen von Lösemitteln lassen sich einsetzen. Die eingesetzten Lösemittel und Trägermedien verhalten sich vorzugsweise chemisch inert gegenüber den in den Verfahren a., b., c. und d. zur Reaktion gebrachten Ausgangsverbindungen.

Die Komponente K weist in allen vier Methoden entweder zwei primäre Amingruppen oder eine primäre Amingruppe und eine OH-Gruppe als Isocyanat-reaktive Gruppen und die Komponente L mindestens eine primäre Amin-, eine sekundäre Amin- oder eine OH-Gruppe als Isocyanat-reaktive Gruppe auf.

Der erfindungsgemäße Polyharnstoff kann auch nach Abschluss der Reaktion durch Entfernen der flüchtigen Bestandteile bspw. durch Eindampfen der Lösung als Feststoff gewonnen werden.

Als vorteilhaft hat sich auch die Verwendung von flüssigen Salzen, so genannten ionischen Flüssigkeiten, wie sie beispielsweise in der Veröffentlichung Zhang et al., J. Phys. Chem. Ref. Data 2006, Vol. 35 (4), 1475 beschrieben sind, als Reaktionsmedium zur Herstellung der erfindungsgemäßen Polyharnstoffe herausgestellt. Unter "ionischen Flüssigkeiten" werden im Rahmen der vorliegenden Erfindung organische Salze oder Gemische aus organischen Salzen verstanden, deren Schmelzpunkte unterhalb 80 °C liegen, vorzugsweise liegen deren Schmelzpunkte unter 50 °C, besonders bevorzugt unter 30 °C und ganz besonders bevorzugt unter 20 °C. Die hierin besonders bevorzugten ionischen Flüssigkeiten sind bei Raumtemperatur (25 °C) flüssig. Sie können anstelle der polaren aprotischen Lösemittel in den gleichen Mengen wie das Lösemittel eingesetzt werden.

Die Reaktionen können in Gegenwart löslicher anorganischer Lithiumverbindungen, wie z.B. Lithiumchlorid oder Lithiumnitrat, erfolgen. Bei der Verwendung von flüssigen Salzen kann auf den Einsatz von Lithiumsalzen verzichtet werden.

Die Stoffmenge an Lithiumverbindung beträgt vorzugsweise das 0,2- bis 2,0-fache der Stoffmenge der Komponente K. Bevorzugt beträgt die Stoffmenge das 0,5- bis 1,5-fache, besonders bevorzugt das 0,6- bis 1,0-fache der Stoffmenge der Komponente K. Der Einsatz von Lithiumverbindungen oder flüssigen Salzen ist bei den Verfahren zur Herstellung der erfindungsgemäßen Polyharnstoffe vorteilhaft, um die Lagerstabilität der Rheologiesteuerungsmittelsysteme zu erhöhen.

Die Wahl der jeweiligen Reaktionsbedingungen (Reaktionstemperatur, Reaktionsdauer, Dosierzeiten, Katalysator wie Organozinn-Verbindungen oder tertiäre Amine etc.) sind dem Fachmann bekannt und werden in den Ausführungsbeispielen näher erläutert. Das gewichtsmittlere Molekulargewicht der Produkte wird über die Verhältnisse f der einzelnen Komponenten eingestellt.

Als Diisocyanat-Komponente werden Verbindungen eingesetzt, die die Reste R², R³, R⁴, R⁵ und/oder R⁶ enthalten. Dies umfasst aliphatische, cycloaliphatische, aromatische oder arylaliphatische Diisocyanate allein oder Mischungen davon. Spezielle Beispiele solcher Diisocyanate sind 1,4-Tetramethylendiisocyanat, 1,6-Hexamethylendiisocyanat, 2,2,4-Trimethyl-1,6-hexamethylendiisocyanat, 1,10-Decamethylendiisocyanat, 1,4-Cyclohexandiisocyanat, Isophorondiisocyanat, p-Phenylendiisocyanat, m-Phenylendiisocyanat, 2,6-Toiuendiisocyanat, 2,4-Toluendiisocyanat und deren Mischungen, p- und m-Xylylendiisocyanat, 4,4'-Diisocyanatodicyclohexylmethan, 3,3'-Dimethyl-4,4'-Bisphenylendiisocyanat, 3,3'-Dimethyl-diisocyanatodicyclohexylmethan, die Isomerenmischungen 2,4'- und 4,4'-Diisocyanatodiphenylmethan und C₃₆-Dimerdiisocyanat.

Bei der Komponente K handelt es sich vorzugsweise um aliphatische, araliphatische oder aromatische primäre Diamine oder Alkanolamine, die primäre Amingruppen aufweisen. Bevorzugt sind primäre Diamine. Die Komponente kann sich aus einem Gemisch mehrerer Diamine oder Alkanolamine zusammensetzen. Sie enthalten die Reste R², R³, R⁴, R⁵ und/oder R⁶.

Beispiele geeigneter Diamine sind Ethylendiamin, Neopentandiamin, 1,2- und 1,3-Propandiamin, 1,6-Hexamethylendiamin, 1,8-Octamethylendiamin, 1,10-Decamethylendiamin, 1,12-Dodecamethylendiamin, Cyclohexyldiamin, 4,4'-Diaminodicyclohexylmethan, 3,3'-Dimethyl-4,4'-Diaminodicyclohexylmethan, Isophorondiamin, 4,7-Dioxadecan-1,10-diamin, 4,7,10-Trioxadecan-1,12-diamin, Polyoxyalkylendiamine, welche Ethylenoxid- und/ oder Propylenoxid-Gruppen, statistisch oder blockweise angeordnet, enthalten (bekannt unter den Markennamen Jeffamin D und Jeffamin ED von Huntsman) mit einem gewichtsmittleren Molekulargewicht zwischen 148 und 4000 g/mol (Hersteller-Angabe), para- und meta-Xylylendiamin; 4,4-Diamino-diphenylmethan, 3,3-Dimethyl-4,4-diamino-diphenylmethan, isomere Phenylendiamine oder isomere Xylylendiamine.

Beispiele geeigneter Alkanolamine sind Monoethanolamin, 3-Amino-1-propanol, 2-Amino-1-butanol, Isopropanolamin, 5-Amino-1-pentanol, 2-(2-Aminoethoxy)ethanol, N-Methylethanolamin, N-Ethylethanolamin, N-Butylethanolamin, N-(2-Hydroxyethyl)anilin verwendet werden.

Die Monoisocyanat-Komponente enthält die Reste R¹ und R⁷ der erfindungsgemäßen Polyharnstoffe. Die Monoisocyanat-Komponente wird vorzugsweise ausgewählt aus aliphatischen, cycloaliphatischen, aromatischen oder arylaliphatischen Monoisocyanaten, die gesättigt oder ungesättigt sein können. Vorzugsweise enthält die Monoisocyanat-Komponente keine ethylenisch ungesättigten Doppelbindungen.

Beispiele sind Cyclohexylisocyanat, Phenylisocyanat, n-Propylisocyanat, n-Hexylisocyanat, Stearylisocyanat, 2-Isocyanatopropan, m-Tolylisocyanat, p-Tolylisocyanat, Benzylisocyanat, 2-Ethylphenylisocyanat, 1-Naphthylisocyanat oder 2-Naphthylisocyanat eingesetzt werden.

Ganz besonders bevorzugt sind C₅-C₁₂-Arylenurethanmonoisocyanate, insbesondere Toluylenurethanmonoisocyanate, wie sie in der EP 1188779 beschrieben werden.

Die Monoisocyanat-Komponente kann polare funktionelle Gruppen wie beispielsweise Carboxyl-, Ester-, Nitril-, Amid-Gruppen oder heteroaromatische Gruppierungen enthalten. Ebenso können Amin- und OH-Gruppen enthalten sein, wobei diese funktionellen Gruppen blockiert sind. Liegen Carboxylgruppen vor, so können auch diese blockiert sein. Die Schutzgruppen werden nach Ablauf der Urethan- bzw. Harnstoffbildungsreaktion entfernt. Geeignete Blockierungsmittel und Maßnahmen zu ihrer Entfernung sind dem Fachmann bekannt. Die Aminogruppen können auch versalzt oder quartärnisiert vorliegen. Die Carboxylgruppen können ebenfalls versalzt vorliegen. Die gegenüber Isocyanat-Gruppen reaktive Komponente L enthält wie die Monoisocyanat-Komponente die Reste R¹ und R⁷ der erfindungsgemäßen Polyharnstoffe. Die Komponente L wird vorzugsweise ausgewählt aus der Gruppe bestehend aus Monoalkohlen, Polyalkoholen, primären Monoaminen, sekundären Monoaminen, primären Polyaminen, sekundären Polyaminen, Monoalkanolaminen und Mischungen davon. Die Verbindungen können linear oder verzweigt sowie gesättigt oder ungesättigt sein. Vorzugsweise sind sie gesättigt.

Diejenigen OH- bzw. Amingruppen, die mit den NCO-Gruppen nicht zur Reaktion gelangen sollen, werden mit entsprechenden Schutzgruppen versehen und werden nach Ablauf der Urethan- bzw. Harnstoffbildungsreaktion wieder entfernt. Diese Aminogruppen können auch versalzt oder quartärnisiert vorliegen.

Bevorzugt werden Monoalkohole eingesetzt. Ganz besonders bevorzugt sind Monoalkohole, die Ethylenoxid- und/ oder Propylenoxid- und/ oder Butylenoxid- und/ oder Styroloxidgruppen enthalten.

Unter Polyalkoholen und Polyaminen werden Verbindungen verstanden, die mindestens zwei Hydroxyl- bzw. zwei Amingruppen aufweisen.

Geeignete Mono- und Polyalkohole sind n-Butanol, 2-Ethyl-hexanol, Isotridecylalkohol, Guerbet-Alkohole der Kettenlänge C₁₀ bis C₂₀, Oleylalkohol, Linoleylalkohol, Laurylalkohol, Stearylalkohol, Glycerin, Dipentaerythrit, Polyglycerin, Cyclohexanol oder deren alkylsubstituierte Derivate und Benzylalkohol.

Die Verbindungen der Komponente L können neben der Isocyanat-reaktiven Gruppe weitere polare funktionelle Gruppen wie beispielsweise Carboxyl-, Ester-, Nitril-, Amid-Gruppen oder heteroaromatische Gruppierungen enthalten. Beispiele sind 12-Hydroxystearinsäure, Milchsäure, Äpfelsäure, Glykolsäure und deren Ester oder Amide, aber auch Verbindungen wie N-Hydroxyethylmorpholin, N-Hydroxyethylpyrrolidon, N-Hydroxyethylimidazol, alkoxylierte Fettamine, Dimethylethanolamin oder Triethanolamin. Vorzugsweise sind die funktionellen Gruppen Carboxylgruppen. Eine besonders bevorzugte Verbindung als Komponente L mit Carboxylgruppen ist 12-Hydroxystearinsäure.

Zur Einstellung der Polarität sind besonders die alkoxylierten Derivate der oben aufgeführten Alkohole geeignet, wobei in diesem Fall auch niedere Alkohole wie z. B. Methanol oder Allylalkohol als Starterkomponente für die Alkoxylierung verwendet werden können. Die so hergestellten Polyether enthalten unter anderem bevorzugt Ethylenoxid- und/oder Propylenoxideinheiten in der Kette und können diese Einheiten alternierend oder in Sequenzen aufweisen. Bei der Alkoxylierung können auch aromatische Alkohole wie z.B. Phenole oder Alkylphenole als Startkomponente eingesetzt werden.

Um die Verträglichkeit der erfindungsgemäßen Polyharnstoffe an die diese enthaltende Formulierungen anzupassen, ist es auch möglich, Ester- oder Polyestergruppen in die Alkoholkomponente einzubringen, z. B. durch Addition von Lactonen wie epsilon-Caprolacton an die oben aufgeführten Alkohole oder Alkoholethoxylate, oder durch Verwendung hydroxyfunktioneller (Meth)acrylate.

Bei den aliphatischen Aminen der Komponente L werden vorzugsweise lineare, verzweigte oder cyclische Amine mit 2 bis 44 Kohlenstoffatomen eingesetzt. Beispiele sind Ethylamin, Propylamin, Isopropylamin, Butylamin, sek. und tert.-Butylamin, 3-Methyl-1-butanamin, Hexylamin, 2-Ethylhexylamin, Octylamin, Cyclopentylamin, Cyclohexylamin, Tridecylamin, Oleylamin, Octadecylamin und die unter dem Handelsnamen Armeen von Akzo Nobel bekannten Mischungen von C₁₂-C₂₂ Aminen. Erfindungsgemäß können neben Polyolefinaminen wie z. B. Polyisobutylenamin auch bevorzugt Polyoxyalkylenmonoamine, welche Ethylenoxid- und/ oder Propylenoxidgruppen enthalten und welche unter dem Handelsnamen Jeffamin M600, M1000, M2005 und M2070 von Huntsman bekannt sind, eingesetzt werden.

Bei den araliphatischen Aminen handelt es sich um Verbindungen wie z.B. Benzylamin, 2-Phenylethylamin oder 1-Methylbenzylamin.

Beispiele geeigneter Monoalkanolamine sind 3-Amino-1-propanol, 2-Amino-1-butanol, Isopropanolamin, 5-Amino-1-pentanol, 2-(2-Aminoethoxy)ethanol, N-Methylethanolamin, N-Ethylethanolamin, N-Butylethanolamin und N-(2-Hydroxyethyl)anilin.

Ebenfalls geeignet sind 2-Methoxyethylamin, 2-Ethoxyethylamin, 3-Methoxy-1-propylamin, 1-Methoxymethylpropylamin, 1,1-Dimethoxy-2-propylamin, 3-Ethoxy-1-propylamin, 3-Butoxy-1-propylamin, 3-(2-ethylhexyloxy)-1-propylamin, 3-Tridecyloxypropylamin, 3-Stearyloxypropylamin, p-Methoxybenzylamin, 3,4-Dimethoxybenzylamin, p-Methoxyphenylethylamin, 3,4-Dimethoxyphenylethylamin, 9-phenoxy-4,7-dioxanon-1-amin, 2-Methyl-4-methoxyanilin, 2,5-Dimethoxy-anilin, Furfurylamin, Tetrahydrofurfurylamin, 2-(4-Morpholinyl)ethylamin, 4-(3-Aminopropyl)morpholin, 3-(2-Ethylhexyloxy)propylamin und 2,2'-Aminoethoxyethanol.

Weiterhin können Verbindungen wie 11-Aminoundecansäure, Glutaminsäure und alle bekannten α-, β- und γ-Aminosäuren verwendet werden.

Als sekundäre Amine sind beispielsweise Diethylamin, Dipropylamin, Diisopropylamin, Dibutylamin, Diisobutylamin, Dihexylamin, Dioctylamin, Dicyclopentylamin, Dicyclohexylamin, Ditridecylamin, Dioctadecylamin oder Diphenylamin geeignet.

Gegenstand der Erfindung ist weiterhin ein Verfahren zur Herstellung des Polyharnstoffs. Das Verfahren kann nach einer der vier Methoden a., b., c. oder d. durchgeführt werden. Es resultieren im Wesentlichen klare bis trübe, niedrig bis mittelviskose Lösungen mit bevorzugten Wirksubstanzanteilen zwischen 10 - 70 Gew.-%, besonders bevorzugt 15 - 55 Gew.-% und ganz besonders bevorzugt 20 - 50 Gew.-%, bezogen auf das Gesamtgewicht der Lösung, oder wachsartig oder gelartig erstarrte Lösungen, die durch leichtes Erhitzen auf 40 - 70 °C wieder in flüssige, applizierbare Form gebracht werden können. Der Polyharnstoff kristallisiert in der Lösung nicht aus.

Die erfindungsgemäßen Polyharnstoffe können als Rheologiesteuerungsmittel verwendet werden. Bei dieser Verwendung beträgt der Anteil an Polyharnstoff in einer Formulierung vorzugsweise 0,05 bis 10,0 Gew.-%, bevorzugt 0,1 bis 8,0 Gew.-% und besonders bevorzugt 0,2 bis 5,0 Gew.-%, bezogen auf das Gesamtgewicht der in ihrer Rheologie zu beeinflussenden Formulierung.

Daher betrifft die Erfindung auch Formulierungen, die die erfindungsgemäßen Polyharnstoffe enthalten. Vorzugsweise sind 0,05 bis 10,0 Gew.-%, bevorzugt 0,1 bis 8,0 Gew.-% und besonders bevorzugt 0,2 bis 5,0 Gew.-% Polyharnstoff, bezogen auf das Gesamtgewicht der Formulierung, enthalten.

Geeignete Formulierungen, deren Rheologie gesteuert werden kann, sind Weichmacher, Lösemittel, Öle, Mineralöle, Wasser und/oder Lösemittel enthaltende Zusammensetzungen der Erdölproduktion (wie z. B. Techniken zur erweiterten Ölförderung (Enhanced Oil Recovery)), Wasser und/oder Lösemittel enthaltende Zusammensetzungen für Kosmetik, Human- und Tierernährung, Dermatologie, Pharmazie, Wasch- und Reinigungsmittel, Pflanzenschutzmittel sowie Mittel zur Oberflächenmodifizierung oder härtbare flüssige oder pastöse Polymersysteme.

Härtbare flüssige oder pastöse Polymersysteme werden nach Applikation oder sonstiger Verarbeitung durch meist thermische Verfahren aber auch andere Mechanismen, wie z.B. radikalische Copolymerisation oder Polyaddition in einen festen Zustand überführt. Dies sind z. B. lösemittelhaltige, wässrige und lösemittelfreie Lacke und Beschichtungsmittel auf der Basis von Bindemitteln wie z.B. Polyurethanen (1 K und 2K), Polyacrylaten, Polyester-, Alkyd- und Epoxidharzen, PVC-Plastisolen, - organosolen, Thermoplasten, Beschichtungen auf Epoxidbasis und ungesättigten Polyesterharzen, sowie kosmetische Formulierungen, insbesondere Nagellacke, Fußbodenbeschichtungsmittel, Formmassen, Laminierharze, Klebstoffe, Dichtungsmassen, Druckfarben, Fugenverguss- und Spachtelmassen.

Die für die Verwendung bevorzugten Ausführungsformen der Polyharnstoffe richten sich nach dem Einsatzgebiet und sind oben bereits ausführlich vorgestellt worden.

Die Erfindung betrifft auch Rheologiesteuerungsmittel, die mindestens einen erfindungsgemäßen Polyharnstoff enthalten. Vorzugsweise enthalten die Rhelologiesteuerungsmittel mindestens einen erfindungsgemäßen Polyharnstoff und mindestens ein Trägersystem. Beispiele für Trägersysteme sind organische Lösemittel, die polar oder unpolar sein können. Der oder die Polyharnstoffe können im Trägersystem beispielsweise gelöst oder eindispergiert sein. Das Rheologiesteuerungsmittel selbst kann als Feststoff, Feststoffgemisch, Lösung, Dispersion wie Emulsion oder Suspension, Gel oder Paste vorliegen. Soll das Rheologiesteuerungsmittel als Lösung vorliegen, werden vorzugsweise polare aprotische Lösemittel eingesetzt. Besonders bevorzugt sind Polyharnstoff-enthaltenden Lösungen, die aus den Herstellungsmethoden a., b., c. oder d. gewonnen werden. Für Pasten eigenen sich vorzugsweise unpolare Lösemittel wie paraffinische Kohlenwasserstoffe als Trägersystem.

Bevorzugt sind in dem Rheologiesteuerungsmittel 10 bis 70 Gew.-%, besonders bevorzugt 15 bis 55 Gew.-% und ganz besonders bevorzugt 20 bis 50 Gew.-%, jeweils bezogen auf das Gesamtgewicht des Rheologiesteuerungsmittels, mindestens eines erfindungsgemäßen Polyharnstoffs enthalten.

Das erfindungsgemäße Rheologiesteuerungsmittel kann Bestandteile wie filmbildende Harze enthalten. Beispiele für filmbildende Harze sind Polyurethane (1 K und 2K), Polyacrylate, Polyester-, Alkyd- und Epoxidharze, PVC-Plastisole, -organosole, Thermoplaste, Beschichtungen auf Epoxidbasis und ungesättigten Polyesterharze enthalten. Vorzugsweise ist das Rheologiesteuerungsmittel frei von filmbildenden Harzen.

Darüber hinaus kann das erfindungsgemäße Rheologiesteuerungsmittel übliche Additive enthalten. Beispiele für Additive sind Antiblockmittel, Stabilisatoren, Antioxidantien, Pigmente, Netzmittel, Dispergiermittel, Emulgatoren, UV-Absorber, Radikalfänger, Slipadditive, Entschäumer, Haftvermittler, Verlaufmittel, Wachse, Nanoteilchen, filmbildende Hilfsmittel und Flammschutzmittel. Bevorzugte Additive sind Netzmittel, Dispergiermittel und/oder Emulgatoren.

Die Rheologiesteuerungsmittel werden vorzugsweise in den Einsatzgebieten verwendet, in denen die enthaltenen Polyharnstoffe verwendet werden können.

Die Rheologiesteuerungsmittel werden so verwendet, dass sich in einer Formulierung vorzugsweise 0,05 bis 10,0 Gew.-%, bevorzugt 0,1 bis 8,0 Gew.-% und besonders bevorzugt 0,2 bis 5,0 Gew.-% Polyharnstoff, bezogen auf das Gesamtgewicht der Formulierung, ergibt.

Im Folgenden wird die Erfindung unter Bezugnahme auf Beispiele weiter erläutert.

### Beispiele

Die Prozentangaben sind, soweit nichts anderes angegeben ist, Gewichtsprozente. Mit dem Begriff "Wirksubstanz" wird auf die in dem Vergleichsbeispiel 1 in den Beispielen 1 bis 6 hergestellten Harnstoff-Verbindungen abgestellt.

### Vergleichsbeispiel 1 (gemäß Stand der Technik)

Zunächst wird ein Monoaddukt gemäß der Patentschrift EP 1188779 aus einem Gemisch von 2,4-Toluylendiisocyanat und 2,6-Toluylendiisocyanat (Desmodur T65, Bayer) und Butyltriglykol hergestellt.

In einem Reaktionsgefäß werden unter Rühren 4,1 g (0,096 mol) LiCl in 171,4 g N-Ethylpyrrolidon gelöst. Danach werden 27,2 g (0,2 mol) meta-Xylylendiamin zugegeben und die klare Mischung auf 60 °C erwärmt. Anschließend werden 154,4 g (0,4 mol) des Monoaddukts aus Desmodur T65 und Butyltriglykol unter Rühren innerhalb von 1 Stunde zugetropft, so dass die Temperatur nicht über 65 °C steigt. Zur Vervollständigung der Reaktion wird das Reaktionsgemisch für 3 Stunden bei 60 °C gerührt. Es wird ein klares und flüssiges Produkt erhalten. Das gewichtsmittlere Molekulargewicht beträgt 2200 g/mol.

### Beispiel 1:

In einem Reaktionsgefäß werden unter Rühren 0,7g (0,017 mol) LiCl in 76,4 g N-Methylpyrrolidon gelöst. Danach werden 2,3g (0,017 mol) meta-Xylylendiamin zugegeben und die klare Mischung auf 35 °C erwärmt. Anschließend werden 5,9 g (0,034 mol) Toluylendiisocyanat (Desmodur T80, Bayer) unter Rühren innerhalb von 1 Stunde zugetropft, so dass die Temperatur nicht über 45 °C steigt. Nach beendeter Zugabe des Toluylendiisocyanats werden 10,2 g (0,034mol) auf 65 °C erwärmte Hydroxystearinsäure zugetropft. Zur Vervollständigung der Reaktion wird das Reaktionsgemisch für 3 Stunden bei 80 °C gerührt. Es wird ein trübes, homogenes und flüssiges Produkt erhalten. Das gewichtsmittlere Molekulargewicht beträgt 49000 g/mol.

### Beispiel 2:

In einem Reaktionsgefäß werden unter Rühren 15,1g (0,36 mol) LiCl in 878,8 g N-Methylpyrrolidon gelöst. Danach werden 49,3g (0,36 mol) meta-Xylylendiamin zugegeben und die klare Mischung auf 80 °C erwärmt. Anschließend werden 44,4 g (0,3 mol) Hexamethylendiisocyanat unter Rühren innerhalb von 45 Minuten zugetropft. Nach beendeter Zugabe des Hexamethylendiisocyanat werden 110,9 g (0,12mol) eines nach in Patentschrift EP 1188779 beschriebenem Verfahren hergestellten Monoaddukts aus Desmodur T65 und Methoxypolyethylenglycol (MPEG750) zugetropft. Zur Vervollständigung der Reaktion wird das Reaktionsgemisch für 3 Stunden bei 80 °C gerührt. Es wird ein klares, farbloses und flüssiges Produkt erhalten. Das gewichtsmittlere Molekulargewicht beträgt 34500 g/mol.

### Beispiel 3:

Zunächst wird ein Monoaddukt gemäß der Patentschrift EP 1188779 aus Gemisch von 2,4-Toluylendiisocyanat und 2,6-Toluylendiisocyanat (Desmodur T80, Bayer) und Butoxypolyalkylenglycol (Polyglycol B11/50, Clariant) hergestellt.

In einem Reaktionsgefäß werden unter Rühren 3,8 g (0,09 mol) LiCl in 146,3 g Dimethylsulfoxid gelöst. Danach werden 10,3 g (0,075 mol) para-Xylylendiamin zugegeben und die klare Mischung auf 60 °C erwärmt. Anschließend wird eine Mischung aus 10,4 g (0,06 mol) Desmodur T65 und 38,2 g (0,03 mol) des Monoaddukts aus Desmodur T80 und Butoxypolyalkylenglycol unter Rühren innerhalb von 1 Stunde zugetropft, so dass die Temperatur nicht über 65 °C steigt. Zur Vervollständigung der Reaktion wird das Reaktionsgemisch für 3 Stunden bei 60 °C gerührt. Es wird ein klares, farbloses und flüssiges Produkt erhalten. Das gewichtsmittlere Molekulargewicht beträgt 15000 g/mol.

### Beispiel 4:

In einem Reaktionsgefäß werden 69,6 g (0,4 mol) Desmodur T80 vorgelegt und 145,6 g (0,2 mol) Polyester aus 5mol Caprolacton und 1mol Decanol unter Rühren innerhalb von 45 Minuten zudosiert. Die Temperatur wird dabei unterhalb 45 °C gehalten. Nach beendeter Zugabe wird weitere 2 Stunden gerührt. In einem zweiten Reaktionsgefäß werden unter Rühren 12,6 g (0,3 mol) LiCl in 627,4 g N-Ethylpyrrolidon gelöst. Danach werden 41,1 g (0,3 mol) meta-Xylylendiamin zugegeben und die Lösung auf 60 °C erwärmt. Anschließend wird die Mischung aus dem Monoaddukt und dem überschüssigen Desmodur T80 aus dem ersten Reaktionsgefäß unter Rühren innerhalb von 90 Minuten in das zweite Reaktionsgefäß zugetropft, so dass die Temperatur nicht über 65 °C steigt. Zur Vervollständigung der Reaktion wird das Reaktionsgemisch für 3 Stunden bei 60 °C gerührt. Es wird ein klares, farbloses und viskoses Produkt erhalten. Das gewichtsmittlere Molekulargewicht beträgt 12500 g/mol.

### Beispiel 5:

In einem Reaktionsgefäß werden 10,0 g (0,045 mol) Isophorondiisocyanat vorgelegt und 12,1 g (0,045 mol) Oleylalkohol unter Rühren innerhalb von 15 Minuten zudosiert. Die Temperatur wird dabei unterhalb 45 °C gehalten. Nach beendeter Zugabe wird weitere 2 Stunden gerührt. In einem zweiten Reaktionsgefäß werden unter Rühren 4,3 g (0,102 mol) LiCl in 126,3 g N-Methylpyrrolidon gelöst. Danach werden 7,9 g (0,068 mol) Hexamethylendiamin zugegeben und die Mischung auf 60 °C erwärmt. Anschließend wird eine Lösung des Monoaddukts aus dem ersten Reaktionsgefäß und 7,8 g (0,045 mol) Desmodur T65 innerhalb von 2 Stunden unter Rühren in das zweite Reaktionsgefäß getropft, so dass die Temperatur nicht über 65 °C steigt. Zur Vervollständigung der Reaktion wird das Reaktionsgemisch für 3 Stunden bei 60 °C gerührt. Es wird ein gelbes und viskoses Produkt erhalten. Das gewichtsmittlere Molekulargewicht beträgt 7500 g/mol.

### Beispiel 6:

In einem Reaktionsgefäß werden unter Rühren 2,8 g (0,0675 mol) LiCl in 134,7 g N-Methylpyrrolidon gelöst. Danach werden 40,5 g (0,0675 mol) Jeffamin ED600 und 0,915 g (0,015 mol) Aminoethanol zugegeben und die klare Mischung auf 80 °C erwärmt. Anschließend werden 13,05 g (0,075 mol) Desmodur T65 unter Rühren innerhalb von 2 Stunden zudosiert, so dass die Temperatur nicht über 85 °C steigt. Nach beendeter Zugabe wird das Reaktionsgemisch für 3 Stunden bei 80 °C gerührt. Es wird ein klares, farbloses und flüssiges Produkt erhalten. Das gewichtsmittlere Molekulargewicht beträgt 20000 g/mol.

### Anwendungstechnische Ergebnisse

Die erfindungsgemäßen Rheologiesteuerungsmittel zeigen anwendungstechnische Vorteile gegenüber dem Stand der Technik z.B. in der Verträglichkeit bzw. der Scherstabilität, so wie eine universelle Wirksamkeit in Formulierungen unterschiedlicher Polarität.

### Test auf Verträglichkeit:

Hierzu werden die Rheologiesteuerungsmittel, enthaltend Polyharnstoff und Lösemittel, in einen Automobil-Klarlack auf Polyester-Melamin-Basis unter Rühren bei Raumtemperatur mit einem Dispermat CV bei 2 m/s 2 min. eingearbeitet. Die Verträglichkeit des Rheologiesteuerungsmittels im Lacksystem wird an Hand der Trübung des Nasslackes beurteilt und erfolgt 1 Tag nach der Einarbeitung. Die Beurteilung erfolgt visuell, wobei eine Skala von 1 - 6 verwendet wird (1 = klar bis 6 = stark trüb) und ist in Tabelle 1 dargestellt.

**Testformulierung 1: Automobil-Klarlack auf Basis Setal 1715 VX-74 / Setamine US 138 BB 70**

| Komponente | Testformulierung 1 | Vergleichsformulierung 1 (gemäß EP 198519) |
|---|---|---|
| Setal 1715 VX-74 | 52,0% | 33,2% |
| Setal 91715 SS-55 | -- | 25,2% |
| Setamine US 138 BB 70 | 24,0% | 24,0% |
| Shellsol A | 6,0% | 4,4 % |
| Solvesso 150 | 6,0% | 4,4 % |
| Xylol | 6,0% | 4,4 % |
| Iso-Butanol | 6,0% | 4,4 % |
| Gesamt | 100,0 % | 100,0 % |

| | |
|---|---|
| Setal 1715 VX-74: | Polyester Bindemittel 72%ig in Solvesso 100 / Xylol 75:25 |
| | von Nuplex Resins |
| Setamine US 138 BB 70: | Melamin Bindemittel 70%ig in 1-Butanol von Nuplex |
| | Resins |
| Setal 91715 SS-55: | Polyester Bindemittel 53%ig in Xylol / Solvesso 100 |
| | 53:47 von Nuplex Resins |
| | (enthält 3,5 Gew.-% sag control agent) |
| Shellsol A | Lösemittel der Firma Shell |
| Solvesso 100/150 | Lösemittel der Firma Exxon Mobile Chemical |
| Dosierung: 0,9 Gew.-% Wirksubstanz bezogen auf die Gesamtformulierung. | |

**Tabelle 1:**

| Testformulierung 1 | |
|---|---|
| Additiv (0,9 Gew.-% Wirksubstanz bez. auf gesamt) | Trübung im Nasslack |
| Nullprobe ( ohne Additiv ) | 1 |
| Vgl.-Bsp. 1 | 4 |
| Beispiel 2 | 2 |
| Beispiel 3 | 1 |
| Beispiel 4 | 1 |

**Vergleichsformulierung 1:**

| | Trübung im Nasslack |
|---|---|
| 25,2 Gew.-% Setal 91715 SS-55 | 5 |
| (entspricht 0,9 Gew.-% SCA in der Vergleichsformulierung) | |

### Test auf Scherstabilität:

Zur Überprüfung der Scherstabilität der erfindungsgemäßen Rheologiesteuerungsmittel werden die Produkte der Beispiele in einer Korrosionsschutzformulierung auf Basis von Epikote 828 eingesetzt. Die Einarbeitung erfolgt auch hier lediglich unter Rühren mit einem Dispermat CV bei 2 m/s 2 min. bei Raumtemperatur in die Komponente A der aufgeführten Formulierung.

Die Überprüfung der Wirksamkeit und Scherstabilität erfolgt 1 Tag nach der Einarbeitung der Produkte nach Zugabe des Härters (Komponente B). Hierzu werden die Lacke mit einem Stufenrakel 50-500 µm und 550-1000 µm auf Kontrastkarten 2801 mit einer automatischen Aufziehbank von BYK Gardner bei einer Geschwindigkeit von 5 cm/s appliziert und vertikal hängend getrocknet. Das Standvermögen wird in µm nass abgelesen und ist ein Maß für die rheologische Wirksamkeit eines Produktes.

Zur Überprüfung der Scherstabilität werden die Proben vor und nach Scherbelastung appliziert. Die Scherbelastung erfolgt mit einem Skandex-Farbrüttler BA S20 (620 rpm, 5 Minuten). Je geringer der Unterschied im Standvermögen vor und nach Scherbelastung ist, desto besser ist die Scherstabilität eines Produktes. Die Ergebnisse der Abtestung sind in Tabelle 2 dargestellt.

**Testformulierung 2: Korrosionsschutzprimer auf Basis Epikote 828/Epikure 3155**

| Komponente A: | |
|---|---|
| Epikote 828 | 42,0% |
| BYK-066N | 1,0 % |
| BYK-P104 | 0,5 % |
| Blanc Fixe N | 18,5 % |
| Talkum AT-1 | 20,0 % |
| Bayferrox 130M | 10,0 % |
| Anreibung : Dispermat CV, 4 cm Zahnscheibe, 8500 U/min., 30 min. bei 50 °C | |
| BYK-358 | 1,0% |
| Araldite DY-E | 7,0% |
| Gesamt ( Komp.A ) | 100,0 % |

| Komponente B: | |
|---|---|
| Epikure 3155 | 32,7 % |

| Die Einarbeitung des Härters erfolgt unter Rühren. | |
|---|---|
| Epikote 828: | flüssiges Bisphenol A Epoxyd Bindemittel, 100%ig der Firma |
| | Hexion Specialty Chemicals |
| Epikure 3155: | niedrigviskoser modifizierter Polyamidhärter der Firma |
| | Hexion Specialty Chemicals |
| BYK-066 N: | Lösung schaumzerstörender Polysiloxane in Diisobutylketon |
| | der Firma BYK-Chemie GmbH |
| BYK-P104: | Netz- und Dispergiermittel der Firma BYK-Chemie GmbH |
| BYK-358: | Acrylatadditiv zur Verbesserung des Verlaufs und Erhöhung |
| | des Glanzes der Firma BYK-Chemie GmbH |
| Blanc Fixe N: | synthetisches Bariumsulfat der Firma Sachtleben |
| Talkum AT-1 | Füllstoff der Firma Norwegian Talc Deutschland GmbH |
| Bayferrox 130M | Eisenoxid-Pigment der Firma Lanxess |
| Araldite DY-E | Reaktivverdünner der Firma Huntsman |
| Dosierung: 0,9 Gew.-% | Wirksubstanz bezogen auf die Gesamtformulierung |

**Tabelle 2:**

| Additive | Standvermögen [µm] vor Scherung | Standvermögen [µm] nach Scherung |
|---|---|---|
| Nullprobe ( ohne Additiv ) | 250 | 250 |
| Vgl.-Bsp. 1 | 500 | 350 |
| Beispiel 1 | 850 | 800 |
| Beispiel 5 | 550 | 400 |
| Beispiel 6 | 550 | 450 |

### Test auf temperaturstabile Wirkung

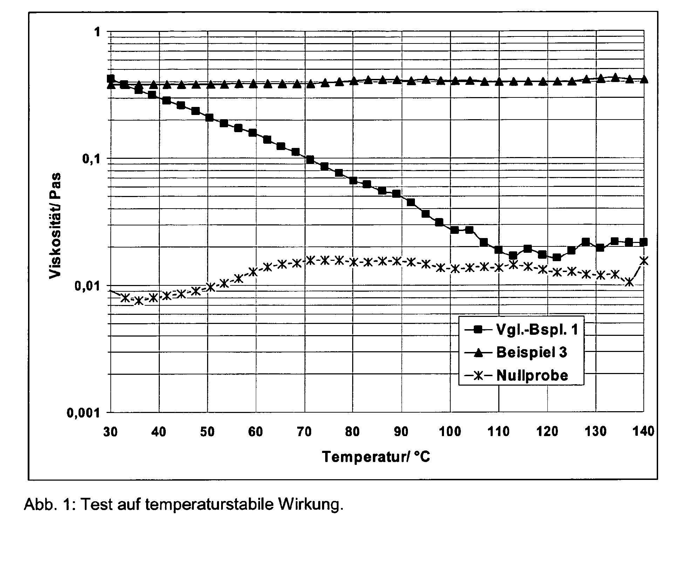

Zur Überprüfung der temperaturstabilen Wirkung wurden Vgl.-Bsp. 1 und Beispiel 3 in Testformulierung 1 analog der unter Test auf Verträglichkeit beschriebenen Vorgehensweise eingearbeitet. Die Proben wurden 1 Tag nach Einarbeitung mittels eines Anton Paar Rheometers MCR 301 untersucht. Hierzu wurde ein Einwegsystem Platte/Platte mit Spalt 0,2 mm verwendet. Die Scherrate D betrug 1 s⁻¹. Die Probe wurde mit einer Heizrate von 6 °C/min erwärmt und im Temperaturbereich von 30 bis 140 °C rheologisch charakterisiert. Das temperaturstabile Verhalten von Beispiel 3 im Vergleich zu Vgl.-Bsp. 1 und der Nullprobe (ohne Additiv) ist in Abbildung 1 dargestellt.

### Test auf universelle Wirksamkeit:

Zur Überprüfung der universellen Wirksamkeit von Rheologiesteuerungsmittein der erfindungsgemäßen Substanzklasse werden die Produkte in verdünnte Bindemittel bzw. Klarlackformulierungen unterschiedlicher chemischer Basis und Polarität eingearbeitet. Die Verdünnung der Bindemittel erfolgt um eine vergleichbare Verarbeitungsviskosität zu erzielen. Die Einarbeitung wird lediglich unter Rühren mit einem Dispermat CV bei 2 m/s 2 min. bei Raumtemperatur durchgeführt.

Einen Tag nach der Einarbeitung der Produkte wird visuell bewertet, ob sich ein Gel aufgebaut hat bzw. ob das verdünnte Bindemittel/ der Klarlack flüssig geblieben ist (+ Gel / - kein Gel).

Die Ergebnisse sind in Tabelle 3 zusammengefasst.

Dosierung: 2 Gew.-% Wirksubstanz bezogen auf das Gewicht der Gesamtzusammensetzung

**Testformulierungen 3:**

| Bindemittel / Klarlacke | Verdünnung / Rezeptur |
|---|---|
| Alkydal F26 | 15% Xylol |
| Bayhydrol D 270 | -- |
| Epikote 1001 | 20% X/MIBK 3:1 |
| Macrynal SM515 | 15% Buac |
| Nagellack | NC E400 33% |
| | Butylacetat 54% |
| | Isopropanol 6% |
| | Weichmacher 7% |
| Plioway AC80 Anl. | 30%ig in TB K30:Shellsol A 4:1 |
| Worléekyd S 365 | 15% TB K30 |

| | |
|---|---|
| Alkydal F26: | Kurzölalkyd, 60%ig in Xylol von Bayer |
| Bayhydrol D270: | Wasserverdünnbarer Polyester, 70%ig in W/BTG von Bayer |
| Macrynal SM515: | OH funktion. Acrylat,70%ig in Buac von Cytec |
| Epikote 1001: | Epoxydharz, 75%ig in Xylol von Hexion Spec. |
| Worléekyd S365: | Langölalkyd, 60%ig in TB von Worlée |
| Plioway AC80: | thermoplast. Styrol-Acrylat-Copolymer, 100%ig von Eliokem |
| NC E400: | Nitrocellulose, 70%ig in Isopropanol von Waldsrode |

**Tabelle 3:**

| Bindemittel/ | Beispiel 1 | Beispiel 3 | Beispiel 5 | Beispiel 6 |
|---|---|---|---|---|
| Klarlack | | | | |
| Alkydal F26 | + | - | - | - |
| Bayhydrol D 270 | - | - | + | + |
| Epikote 1001 | + | + | - | + |
| Macrynal SM515 | - | + | - | + |
| Nagellack | - | + | - | + |
| Plioway AC80 Anl. | - | - | + | - |
| Worléekyd S 365 | + | - | + | - |

## Patentansprüche

1. Polyharnstoff der allgemeinen Formel (I) 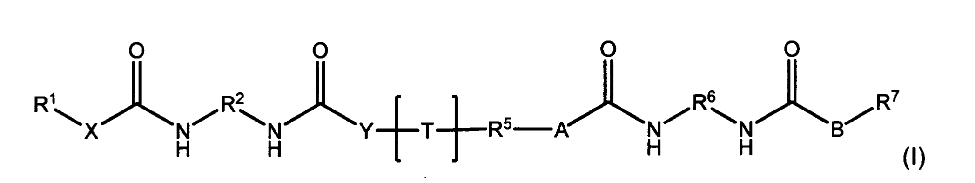 worin
T eine polymere Einheit, welche mindestens 4 Harnstoffgruppen umfasst,
R¹ und R⁷ unabhängig voneinander verzweigte oder unverzweigte C₄-C₃₂-Alkyl-, C₃-C₁₈-Alkenyl-, C₂-C₂₀-Alkinyl-, C₃-C₂₀-Cycloalkyl-, C₃-C₂₀-Cycloalkenyl-, C₅-C₁₂-Aryl- oder -Arylalkyl-, CₘH₂ₘ₊₁(O-CₙH₂ₙ)ₚ-(O-CH(C₆H₅)-CH₂)ᵤ-, U-C₆H₄-(CH₂)ₛ-(O-CₙH₂ₙ)ₓ-(O-CH(C₆H₅)-CH₂)ᵤ-, CₘH₂ₘ₊₁(O-CₙH₂ₙ)ₚ-(O-CH(C₆H₅)-CH₂)ᵤ-(OOC-CᵥH₂ᵥ)ₓ-, U-C₆H₄-(CH₂)ₛ-(O-CₙH₂ₙ)ₚ-(O-CH(C₆H₅)-CH₂)ᵤ-(OOC-CᵥH₂ᵥ)ₓ-, C₄-C₃₂-Hydroxyalkyl-, C₄-C₃₂-Carboxyalkyl-, -CₘH₂ₘC(=O)R⁸-, -CₘH₂ₘCOOR⁸-, - CₘH₂ₘC(=O)NR⁸R⁹- oder -CₘH₂ₘOC(=O)NR⁸R⁹-Reste bedeuten, wobei die Reste substituiert oder unsubstituiert sein können, die Amino- und/oder Carboxylgruppen in versalzter oder quartärnisierter Form vorliegen können und wobei CₘH₂ₘ eine lineare oder verzweigte Alkylengruppe ist und R⁸, R⁹ unabhängig voneinander Wasserstoff, verzweige oder unverzweigte C₁-C₃₂-Alkyl- , C₃-C₁₈-Alkenyl-, C₂-C₂₀-Alkinyl-, C₃-C₂₀-Cycloalkyl-, C₃-C₂₀ Cycloalkenyl-, C₅-C₁₂-Aryl- oder -Arylalkyl-, C₁-C₃₂-Alkoxyalkyl- oder C₁-C₃₂-Acyloxyalkyl-Gruppen darstellen, wobei m = 0-32, n = 2-4, x = 0-100, u = 0-100, v = 1-22, p = 0-100, s = 0-1, U = H, C₁-C₁₂-Alkyl oder -C₆H₅)₁₋₄ ist,
R² und R⁶ unabhängig voneinander verzweigte oder unverzweigte C₄-C₂₂-Alkylen-, C₃-C₁₈-Alkenylen-, C₂-C₂₀-Alkinylen-, C₃-C₂₀-Cycloalkylen-, C₃-C₂₀ Cycloalkenylen-, C₅-C₁₂-Arylen- oder -Arylalkylen-Reste sind,
R⁵ ein verzweigter oder unverzweigter Polyester-, Polyether-, Polyamid-, unverzweigte C₄-C₂₂-Alkylen-, C₃-C₁₈-Alkenylen-, C₂-C₂₀-Alkinylen-, C₃-C₂₀-Cycloalkylen-, C₃-C₂₀ Cycloalkenylen-, C₅-C₁₂-Arylen- oder -Arylalkylen-Rest ist,
A, B, X und Y unabhängig voneinander -O- oder -NR¹⁰- mit R¹⁰ = H, verzweigte oder unverzweigte C₁-C₃₂-Alkyl-, C₃-C₁₈-Alkenyl-, C₂-C₂₀-Alkinyl-, C₃-C₂₀-Cycloalkyl-, C₃-C₂₀-Cycloalkenyl-, C₅-C₁₂-Aryl- oder -Arylalkyl-Reste sind,
wobei das gewichtsmittlere Molekulargewicht 5000 bis 70000 g/mol beträgt, bedeuten.

2. Polyharnstoff nach Anspruch 1, **dadurch gekennzeichnet, dass** die polymere Einheit T eine Einheit der Formel (II) 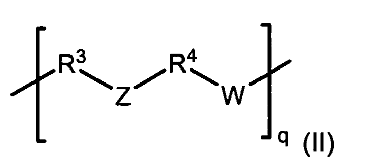 ist, worin
R³ und R⁴ jeweils gleich oder verschieden sind und unabhängig voneinander verzweigte oder unverzweigte Polyester-, Polyether-, Polyamid-, C₄-C₂₂-Alkylen-, C₃-C₁₈-Alkenylen-, C₂-C₂₀-Alkinylen-, C₃-C₂₀-Cycloalkylen-, C₃-C₂₀-Cycloalkenylen-, C₅-C₁₂-Arylen- oder -Arylalkylen-Reste repräsentieren,
Z und W jeweils gleich oder verschieden sind und unabhängig voneinander -NHCOO- oder -NH-CO-NH- repräsentieren und
q = 2 - 200 ist.

3. Polyharnstoff nach einem der vorherigen Ansprüche, **dadurch gekennzeichnet, dass** die polymere Einheit T keine Urethangruppen umfasst.

4. Polyharnstoff nach einem der vorherigen Ansprüche, **dadurch gekennzeichnet, dass** der Polyharnstoff ein gewichtsmittleres Molekulargewicht von 5000 bis 12000 g/mol aufweist.

5. Polyharnstoff nach einem der Ansprüche 1 bis 3, **dadurch gekennzeichnet, dass** der Polyharnstoff ein gewichtsmittleres Molekulargewicht von 10000 bis 26000 g/mol aufweist.

6. Polyharnstoff nach einem der Ansprüche 1 bis 3, **dadurch gekennzeichnet, dass** der Polyharnstoff ein gewichtsmittleres Molekulargewicht von 24000 bis 55000 g/mol aufweist.

7. Polyharnstoff nach einem der Ansprüche 4 bis 6, **dadurch gekennzeichnet, dass** die Reste R¹ und/oder R⁷ mit polaren funktionellen Gruppen substituiert sind und/oder Polyester- und/oder Polyethergruppen enthalten.

8. Polyharnstoff nach einem der vorherigen Ansprüche, herstellbar durch
a. die Reaktion mindestens eines Diisocyanats mit mindestens einer Komponente K, welche zwei NCO-reaktive Gruppen aufweist, in einem molaren Verhältnis von Diisocyanat zu Komponente K von (f+1):f mit f ≥ 1, so dass sich intermediär ein Isocyanat-terminierter Harnstoff mit im Mittel zwei freien Isocyanat-Gruppen im Molekül bildet, und anschließender vollständigen Umsetzung der freien Isocyanat-Gruppen des Intermediats mit mindestens einer gegenüber Isocyanat-Gruppen reaktiven Komponente L
oder
b. die Reaktion mindestens eines Diisocyanats mit mindestens einer Komponente K, welche zwei NCO-reaktive Gruppen aufweist, in einem molaren Verhältnis von Diisocyanat zu Komponente K von f:(f+1) mit f ≥ 1, so dass ein Intermediat mit im Mittel zwei freien Isocyanat-reaktiven, terminalen Gruppen im Molekül gebildet wird, und anschließender vollständiger Umsetzung der freien Isocyanat-reaktiven Gruppen des Intermediats mit mindestens einer Monoisocyanat-funktionellen Verbindung
oder
c. die Reaktion eines Gemischs aus mindestens einem Diisocyanat und mindestens einer Monoisocyanat-funktionellen Verbindung mit mindestens einer Komponente K, welche zwei NCO-reaktive Gruppen aufweist, in einem molaren Verhältnis von Diisocyanat zu Komponente K zu Monoisocyanat-funktioneller Verbindung von f:(f+1):2 mit f ≥ 1,
d. die Reaktion eines Gemischs aus mindestens einer Komponente K, welche zwei NCO-reaktive Gruppen aufweist und mindestens einer gegenüber Isocyanat-Gruppen reaktiven Komponente L mit mindestens einem Diisocyanat in einem molaren Verhältnis von Komponente K zu Diisocyanat zu Komponente L von f:(f+1):2 mit f ≥ 1,
wobei die Komponente K als NCO-reaktive Gruppen entweder zwei primäre Amingruppen oder eine primäre Amingruppe und eine OH-Gruppe und die Komponente L mindestens eine primäre Amin-, eine sekundäre Amin- oder eine OH-Gruppe aufweist.

9. Verfahren zur Herstellung des Polyharnstoffs nach einem der vorherigen Ansprüche, **dadurch gekennzeichnet, dass**
a. mindestens ein Diisocyanat mit mindestens einer Komponente K, welche zwei NCO-reaktive Gruppen aufweist, in einem molaren Verhältnis von Diisocyanat zu Komponente K von (f+1):f mit f ≥ 1 reagiert, so dass sich intermediär ein isocyanat-terminierter Harnstoff mit im Mittel zwei freien Isocyanat-Gruppen im Molekül bildet, und
die freien Isocyanat-Gruppen des Intermediats anschließend mit mindestens einer gegenüber Isocyanat-Gruppen reaktiven Komponente L vollständig umgesetzt werden
oder
b. mindestens ein Diisocyanat mit mindestens einer Komponente K, welche zwei NCO-reaktive Gruppen aufweist, in einem molaren Verhältnis von Diisocyanat zu Komponente K von f:(f+1) mit f ≥ 1 reagiert, so dass ein Intermediat mit im Mittel zwei freien Isocyanat-reaktiven, terminalen Gruppen im Molekül gebildet wird, und
die freien Isocyanat-reaktiven Gruppen anschließend mit mindestens einer Monoisocyanat-funktionellen Verbindung vollständig umgesetzt werden
oder
c. mindestens ein Diisocyanat mit mindestens einer Monoisocyanat-funktionellen Verbindung vermischt und dieses anschließend mit mindestens einer Komponente K, welche zwei NCO-reaktive Gruppen aufweist, in einem molaren Verhältnis von Diisocyanat zu Komponente K zu Monoisocyanat-funktioneller Verbindung von f:(f+1):2 mit f ≥ 1 umgesetzt wird,
d. mindestens eine Komponente K, welche zwei NCO-reaktive Gruppen aufweist, mit mindestens einer gegenüber Isocyanat-Gruppen reaktive Komponente L vermischt und dieses anschließend mit mindestens einem Diisocyanat in einem molaren Verhältnis von Komponente K zu Diisocyanat zu Komponente L von f:(f+1):2 mit f ≥ 1 umgesetzt wird,
wobei die Komponente K als NCO-reaktive Gruppen entweder zwei primäre Amingruppen oder eine primäre Amingruppe und eine OH-Gruppe und die Komponente L mindestens eine primäre Amin-, eine sekundäre Amin- oder eine OH-Gruppe aufweist.

10. Verwendung der Polyharnstoffe nach einem der Ansprüche 1 bis 8 als Rheologiesteuerungsmittel.

11. Rheologiesteuerungsmittel enthaltend mindestens einen Polyharnstoff nach einem der Ansprüche 1 bis 8.

12. Rheologiesteuerungsmittel nach Anspruch 11, **dadurch gekennzeichnet, dass** das Rheologiesteuerungsmittel frei von filmbildenden Harzen ist.

13. Verwendung des Rheologiesteuerungsmittels nach einem der Ansprüche 11 oder 12, **dadurch gekennzeichnet, dass** der Anteil an Polyharnstoff in einer Formulierung 0,05 bis 10 Gew.-%, bezogen auf das Gesamtgewicht der Formulierung, beträgt.

14. Verwendung des Rheologiesteuerungsmittels nach Anspruch 13 zur Rheologiesteuerung in polaren Lösemitteln, als Antiabsetzmittel, zur Vermeidung der Läuferneigung, zur Rheologiekontrolle von Einbrennsystemen oder zur Einstellung des Ablaufverhaltens von Dickschichtsystemen.

15. Formulierung enthaltend Polyharnstoffe nach einem der Ansprüche 1 bis 8.
